Europäisches Patentamt

European Patent Office

Office européen des brevets

(11) Publication number : **0 495 729 A2**

(12) # EUROPEAN PATENT APPLICATION

(21) Application number : **92400130.8**

(22) Date of filing : **17.01.92**

(51) Int. Cl.<sup>5</sup> : **B32B 27/30, B65D 65/40**

(30) Priority : **17.01.91 JP 4063/91**

(43) Date of publication of application :
**22.07.92 Bulletin 92/30**

(84) Designated Contracting States :
**BE DE FR GB IT NL SE**

(71) Applicant : **TERUMO KABUSHIKI KAISHA**
**No. 44-1, Hatagaya 2-chome, Shibuya-ku**
**Tokyo 151 (JP)**

(72) Inventor : **Ijiri, Takao**
**c/o Terumo Kabushiki Kaisha, 818,**
**Misonodaira**
**Fujinomiya-shi, Shizuoka-ken (JP)**
Inventor : **Miyake, Makoto**
**c/o Terumo Kabushiki Kaisha, 818,**
**Misonodaira**
**Fujinomiya-shi, Shizuoka-ken (JP)**

(74) Representative : **Gillard, Marie-Louise et al**
**Cabinet Beau de Loménie 55, Rue**
**d'Amsterdam**
**F-75008 Paris (FR)**

(54) **Composite substrate for medical container.**

(57)    A composite substrate for a medical container comprises a first layer formed of a heat-sealable resin material having a relatively low melting point and a second layer formed of a resin material having a large dielectric loss and a large dielectric constant. The first layer and the second layer are laminated to each other. The melting point of the resin material forming the first layer is in the range of from 80 to 250 °C. The resin material forming the second layer satisfies the relation, $\varepsilon_2 \cdot \tan\delta_2 \geqq 0.05$, wherein $\varepsilon_2$ stands for the dielectric constant at 1 MHz and $\tan\delta_2$ for the dielectric power factor.

# FIG.3

EP 0 495 729 A2

## BACKGROUND OF THE INVENTION

### Field of the Invention

This invention relates to a composite substrate for a medical container which allows both heat-sealing and sealing by high-frequency induction heating. This invention more particularly relates to a composite substrate for a medical container which excels in such properties as resistance to adsorption of chemicals, transparency, flexibility, resistance to surface abrasion, and surface gloss, i.e. the attributes essential to a container for a medical fluid intended particularly for transfusion.

### Description of the Prior Art

Heretofore, for the mutual adhesion of opposed surfaces of plastic films or sheets, broadly a method which effects the adhesion by the use of an adhesive agent or a solvent and a method which attains the adhesion by thermal fusion of the opposed surfaces have been in popular use.

Particularly when a plastic film or sheet is used for a medical material such as a transfusion bag or a blood bag which is required to possess high safety, the former method is unfit for the intended adhesion because of the possibility that the adhesive agent or solvent used therefor will dissolve out of the interface of adhesion into the medical agent or blood held inside the bag and eventually exert an adverse effect on the organism destined to receive a medical treatment. When the plastic film or sheet is used particularly as a medical substrate, therefore, the latter method resorting to thermal fusion is generally adopted.

This thermal fusion method is broadly divided into an external heating method represented by heat seal and an internal heating method represented by high-frequency induction heating.

The heat seal is a method which comprises contacting to one or both outer surfaces of a given layered article comprising the plastic films heated plates either directly or through the medium of a buffer membrane such as of silicone rubber thereby effecting the fusion of the plastic films by virtue of thermal conduction. As the heat source for the heating plate, electrically produced heat or high-pressure steam is used. The heat seal is used most popularly because the apparatus to be required therefor is simple and the cost to be incurred therein is small. It is adopted especially for the fusion involving a polyethylene film, a polypropylene film, a polyamide film, etc. It is, however, unfit for the fusion involving a polyester film, an acetate film, and a casting polypropylene film which have high melting points and a polyvinyl alcohol film and a polyvinyl chloride film which have thermal fusion temperatures in narrow ranges.

The high-frequency induction heating seal is a method which comprises placing a given layered plastic article in a high-frequency electric field thereby inducing generation of heat in the interior of the films and consequently effecting the fusion by virtue of this induced heat. Since this method enables the heat to be concentrically generated in the site of adhesion, the fusion is produced neatly and the strength of adhesion is large. This method, however, is applicable only to films which have relatively heavy dielectric loss such as a polyvinyl chloride film, a polyvinylidene chloride film, and a polyamide film. It is unfit for the fusion involving a polyethylene film, a polypropylene film, a polystyrene film, a polyester film, etc. which have small dielectric loss. There are times when the sparks emitted during the fusion possibly obstruct the fusion. Further, this method has the disadvantage that when a carbonized extraneous matter adheres to the film surface or the electrode surface is not parallel to the grounding surface or is suffered to contain a sharply angular portion, the high-frequency wave wholly passes the portion of such irregular phenomenon and the expected heating of the film surface does not occur and the fusion is not obtained.

In the case of a material which allows both heat sealing and sealing by high-frequency induction heating, therefore, a method of adhesion can be suitably selected, depending on the site of adhesion, the shape of a member requiring the fusion, and the strength of adhesion to be required, for example. This material, therefore, is believed to be highly useful because the sealing by high-frequency induction heating can be switched to the heat-sealing when the material defies the sealing by high-frequency induction heating for the reason mentioned above. A substrate for a medical container which possesses this nature has never been brought into being. Thus, the desirability of providing this substrate has been finding enthusiastic recognition.

It has been heretofore customary for such transfusion containers as transfusion bags and transfusion tubes represented by transfusion sets to be formed of sheets or a tube made of soft vinyl chloride resin. The vinyl chloride resin by nature adsorbs such pharmaceutical compounds as nitroglycerin, diazepam, chlorpromazine hydrochloride, and isosolbalt nitrate. The fact that pharmaceutical compounds stored in such transfusion containers have their concentrations appreciably decreased by the time they are put to use for transfusion has stirred a grave anxiety among the public.

The transfusion containers of this class which are formed of sheets or a tube made of an ethylene-vinyl

EP 0 495 729 A2

acetate copolymer having a vinyl acetate content in the range of from 10 to 15% by weight (hereinafter referred to as "EVA") have been finding practical utility. Since the transfusion containers using this particular substrate exhibit the same property of absorbing the aforementioned pharmaceutical compounds, they have the disadvantage that the container surfaces are apt to be scratched and are devoid of gloss. A double-layered tube having an inner layer of a low-density polyethylene exhibiting a poor adsorbing property to pharmaceutical compounds and an outer layer of EVA flexible and excellent in adhesiveness to the aforementioned low-density polyethylene has found practical utility as connecting tubes for the nitroglycerin grade transfusion sets. This double-layered tube, however, is required to give the inner layer of low-density polyethylene a thickness exceeding a prescribed lower limit for the sake of enabling the inner layer to retain its strength and possess enhanced resistance to the occurrence of pinholes. It is further required to heighten the proportion of ethylene in the EVA of the outer layer for the sake of improving the fastness of adhesion between the outer layer and the inner layer in spite of a consequent sacrifice of the flexibility of the tube. As transfusion tubes incapable of adsorbing pharmaceutical compounds, those made of a blend of a linear type low-density polyethylene with a thermoplastic polystyrene type elastomer, a thermoplastic polyolefin type elastomer, and/or a thermoplastic low-crystalline $\alpha$-olefin type resin have been proposed (JP-A-62-53,671, JP-A-62-53,670, and JP-A-62-53,672). The transfusion tubes using the blend just mentioned, however, are required to set the content of the thermoplastic polystyrene type elastomer, the thermoplastic polyolefin type elastomer, or the thermoplastic low-crystalline $\alpha$-olefin type resin above a prescribed level for the sake of acquiring desired flexibility. Thus, these transfusion tubes have the disadvantage that the tubes will adsorb part of the pharmaceutical compounds or the minute particles in the resin will exude from the tube wall.

In view of the true state of affairs described above, the substrate for a transfusion container is desired to avoid the problem of thermal fusibility mentioned above, cause adsorption of pharmaceutical compounds only inconspicuously when the substrate is used in the form of a sheet or tube in the transfusion container, excel in flexibility and transparency, and furnish the container with a surface proofed against injury and abounding in gloss.

SUMMARY OF THE INVENTION

An object of this invention, therefore, is to provide a novel substrate for medical containers.

Another object of this invention is to provide a substrate for medical containers which allow both heat sealing and sealing by high-frequency induction heating.

A further object of this invention is to provide a substrate for medical containers, such that a medical container like a transfusion container which is formed of this substrate causes adsorption of pharmaceutical compounds only inconspicuously, excels in flexibility and transparency, and forms a surface proofed against injury and abounding in gloss.

The composite substrate for a medical container according to this invention comprises a first layer formed of a heat-sealable resin material having a relatively low melting point and a second layer formed of a resin material having a large dielectric loss and a large dielectric constant. The first layer and the second layer are laminated to each other. The melting point of the resin material forming the first layer is in the range of from 80 to 250 °C. The resin material forming the second layer satisfies the relation, $\varepsilon_2 \cdot \tan\delta_2 \geqq 0.05$, wherein $\varepsilon 2$ stands for the dielectric constant at 1 MHz and $\tan\delta_2$ for the dielectric power factor.

The first layer is melted efficiently by external heating. The second layer, on exposure to a high-frequency electric field, is caused to generate heat internally. This heat is conducted to the first layer and consumed in melting the first layer. The composite substrate, therefore, allows both heat-sealing and sealing by high-frequency induction heating.

In the composite substrate of this invention for a medical container, the first layer is intended to confer upon the composite substrate such characteristic properties as fusibility required chiefly at the site of sealing and proofness against adsorption of pharmaceutical compound required on the inner surface of the medical container. It has been found that the first layer discharges its role fully in an amply small thickness as compared with the second layer which functions to impart substantial mechanical strength and heatproofness to the substrate. The composite substrate, therefore, is desired to satisfy the relation, $L_1 : L_2 = 1 : 2 - 20$, wherein $L_1$ stands for the thickness of the first layer and $L_2$ for the thickness of the second layer. The expression "adsorption of pharmaceutical compound" as used in this specification refers to the phenomenon in which the concentration of pharmaceutical compounds contained in the agent for transfusion or injection decreases when part or the whole of the pharmaceutical compounds are physically adsorbed on the surface of the container or suffered to permeate and diffuse in the substrate forming the container.

In one embodiment of this invention, the composite substrate for a medical container can be formed of ethylene-vinyl acetate copolymer (EVA) sheets. Generally, the dielectric constant and the dielectric power factor

3

of EVA are governed by the content of vinyl acetate in the copolymer. The dielectric constant and the dielectric power factor are heightened and the flexibility and the transparency are enhanced but the strength and the proofness against adsorption of pharmaceutical compounds are lowered in proportion as the vinyl acetate content is increased.

In a preferred embodiment of this invention, the first layer is formed of an EVA having a vinyl acetate content in the range of from 1 to 7% by weight and the second layer is formed of an EVA having a vinyl acetate content in the range of from 7 to 30% by weight.

In another embodiment of this invention, the second layer is joined to one surface of the first layer and a third layer is joined to the other surface of the first layer. Desirably, the third layer is formed of the same resin material as that used for the first layer.

The production of a bag-shaped medical container with the composite substrate of this invention which is constructed as described above is attained by superposing two sheets of the composite substrate in such a manner that the surfaces of their first layers opposite to the surfaces thereof joined severally to their second layers will confront each other and then fusing the opposed surfaces along a prescribed portion by heat-sealing and/or high-frequency sealing. By the heat-sealing or the high-frequency sealing alike, the first layers of the two sheets falling on the inner sides are melted and joined to each other along the prescribed portion for union.

## BRIEF DESCRIPTION OF THE DRAWINGS

Fig. 1 is a magnified cross sectional view illustrating the construction of the composite substrate for a medical container as one embodiment of this invention;

Fig. 2 is a magnified cross sectional view illustrating the construction of the composite substrate for a medical container as another embodiment of this invention; and

Fig. 3 is a partially cutaway magnified cross sectional view illustrating the construction of a transfusion container, one form of medical container, as one embodiment of this invention.

## DETAILED DESCRIPTION OF THE INVENTION

Now, this invention will be described more specifically below with reference to the illustrated embodiments.

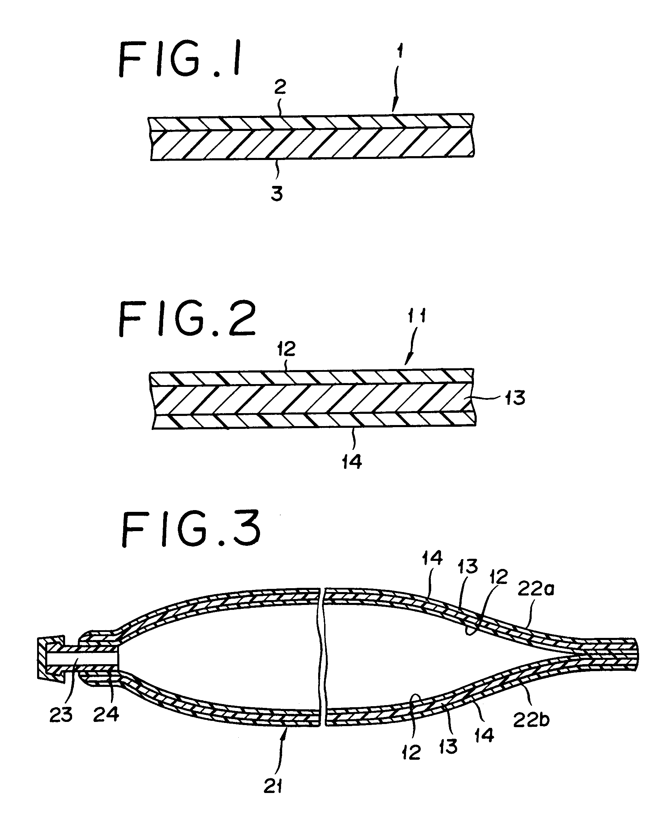

In the embodiment illustrated in Fig. 1, a composite substrate 1 for a medical container comprises a first layer 2 formed of a resin material having a low melting point and a second layer 3 formed of a resin material having a large dielectric loss and a large dielectric constant.

In the composite substrate of this invention for a medical container, the first layer 2 formed of a resin material having a low melting point is capable of fusing itself while being heat-sealed or sealed by high-frequency induction heating and consequently manifesting adhesiveness. It is, therefore, desired to be formed of a resin material having a melting point in the range of from 80 to 250 °C, preferably from 100 to 200 °C. If this melting point is lower than 80 °C, the medical container formed of the composite substrate of this invention has the possibility of the joined part thereof readily rupturing on exposure to heat of a sort while the container is in actual use. Conversely if the melting point is higher than 250 °C, the medical container has the possibility of the first layer thereof avoiding sufficient fusion necessary for ample fusion of the superposed sheets of composite substrate. Further, the resin material forming the first layer 2 is desired not to show its melting point in an extremely narrow range from the standpoint of facilitating the control required in the process of fusion. In the composite substrate of this invention for a medical container, the second layer 3 formed of a resin material having a large dielectric loss and a large dielectric constant is capable of generating heat by virtue of the action of induction heating on exposure to a high-frequency electric field and melting the first layer 2 with the generated heat. It is desired to be formed of a resin material which satisfies the following numerical expression (1):

$$\varepsilon_2 - \tan\delta_2 \geqq 0.05 \quad (1)$$

preferably the following numerical expression (1a):

$$\varepsilon_2 - \tan\delta_2 \geqq 0.08 \quad (1a)$$

wherein $\varepsilon_2$ stands for the dielectric constant and $\tan\delta_2$ for the dielectric power factor at 1 MHz.

It is known that generally when a dielectric substance is interposed between parallel electrodes and subjected to induction heating, the heat quantity Pv which is generated per unit volume per unit time is represented by the following numerical expression (3) irrespectively of the shape of electrodes, the distance separating the electrodes, and the size of the dielectric substance:

$$Pv = 5/9 - f\,\varepsilon\,E^2 \tan\delta \times 10^{-12}\,(W/cm^2) \quad (3)$$

(providing $\delta = \pi - \varnothing$), wherein $f$ (MHz) stands for the applied frequency, $\varnothing$ for the phase difference of the current relative to the voltage, $\varepsilon$ for the dielectric constant of the dielectric substance, and E for the intensity of the magnetic field not embracing the dielectric substance.

4

For the fixed magnitudes of the dielectric constant $\varepsilon$ and the dielectric power factor tan$\delta$, the amount of heat generated herein by the dielectric substance is proportional to the applied frequency $f$ and the square of the intensity of electric field E. For the fixed magnitudes of the applied frequency $f$ and the intensity of electric field E, the amount of heat generated is proportional to the dielectric constant $\varepsilon$ and the dielectric power factor tan$\delta$ of the dielectric substance. Moreover, the dielectric constant $\varepsilon$ and the dielectric power factor tan$\delta$ are varied widely by the frequency even in one and the same substance.

Generally, a resin material possessing a high dielectric constant and a high dielectric power factor can be caused to generate the heat necessary for fusion by a high-frequency electric field of the order of 1 to 50 MHz. An extremely high frequency, however, is required for causing a material possessing a low dielectric constant and a low dielectric power factor to generate heat. (The high-frequency fusion of polyethylene ($\varepsilon$ - tan$\delta$ = 0.001) theoretically necessitates a frequency of 8,450 MHz; an apparatus capable of generating this high frequency electric field cannot be produced as things now stand.) By limiting the resin material forming the second layer to what conforms to the aforementioned condition regarding the magnitude of .tan at 1 MHz, therefore, the second layer 3 is enabled to effect efficient generation of heat in a high-frequency electric field even when the resin material forming the first layer 2 happens to have a low dielectric constant and a low dielectric power factor. As a result, the composite substrate of this invention for a medical container readily succumbs to the work of fusion by high-frequency heating. The magnitudes of the dielectric constant $\varepsilon$ and the dielectric power factor tan$\delta$ which are indicated in this specification are invariably those determined in accordance with ASTM D 150 - 64T.

Though the melting point of the resin material forming the second layer 3 is not particularly limited, it is desired to be approximately in the range of from 80 to 250 °C, preferably from 100 to 200 °C.

The resin material forming the first layer 2 has no particular restriction except for fulfillment of the condition of low melting point mentioned above. The resin materials which are effectively usable for the first layer 2 include polyethylene, cellulose acetate, polypropylene, polystyrene, polytetrafluoroethylene, polycarnonate, and ethylene-vinyl acetate coxolymers having a low vinyl acetate content, for example. Particularly, since the composite substrate for a medical container contemplated by this invention is expected to excel in flexibility, transparency, and proofness against adsorption of pharmaceutical compounds, it is desirable to adopt an ethylene-vinyl acetate copolymer (EVA) of a low vinyl acetate content as the resin material for the first layer 2 among other resin materials cited above. The resin material forming the second layer 3 has no particular restriction except for fulfillment of the conditions of high dielectric constant and high dielectric power factor mentioned above. The resin materials which are effectively usable for the second layer 3 include polyvinyl chloride, polyvinylidene chloride, polyamides, polyurethane, polyesters, and EVAs of a high vinyl acetate content, for example. Where an ethylene-vinyl acetate copolymer having a low vinyl acetate content is adopted as the resin material for the first layer 2, an ethylene-vinyl acetate copolymer having a high vinyl acetate content is used for the second layer 3 particularly desirably among other resin materials cited above because the two layers have closely approximating compositions and melting points and, therefore, can be expected to enjoy ideal interlayer adhesiveness.

Table 1 shows the magnitudes of dielectric constant, dielectric power factor, and melting point of resin materials ideal for the formation of the first layer 2 and the second layer 3 in the composite substrate of this invention for a medical container.

Table 1

| First layer | Dielectric constant $\epsilon$ | Dielectric power factor $\tan\delta$ | (Dielectric constant) $\times$ (Dielectric power factor) $\epsilon \cdot \tan\delta$ | Melting point (°C) |
|---|---|---|---|---|
| Polyethylene | 2.3 | <0.0005 | <0.0012 | 100-140 |
| Polypropylene | 2.0-2.1 | 0.0002-0.0003 | 0.0004-0.0006 | 150-170 |
| Polycarbonate | 2.96 | 0.001 | 0.003 | 220-230 |
| Polystyrene | 2.4-2.65 | 0.0001-0.0003 | 0.0002-0.0008 | 220-230 |
| Second layer | Dielectric constant $\epsilon$ | Dielectric power factor $\tan\delta$ | (Dielectric constant) $\times$ (Dielectric power factor) $\epsilon \cdot \tan\delta$ | Melting point (°C) |
| Rigid polyvinyl chroride | 2.8-3.0 | 0.006-0.04 | 0.017-0.12 | 200-210 |
| Flexible polyvinyl chroride | 3.5-4.5 | 0.09-0.10 | 0.32-0.45 | 180-190 |
| Polyvinylidene | 3.0-4.0 | 0.05-0.08 | 0.15-0.32 | 200-220 |
| Polyamide (Nylon) | 4.0-4.7 | 0.04-0.13 | 0.16-0.61 | 200-270 |
| Polyurethane | 3.5-3.9 | 0.02-0.04 | 0.07-0.16 | 180-190 |

The magnitudes of dielectric constant $\epsilon$ and dielectric power factor $\tan\delta$ indicated in the table are those determined at 20 °C and 1 MHz.

EP 0 495 729 A2

As mentioned above, the dielectric constant and the dielectric power factor of an EVA are generally governed by the vinyl acetate content in the EVA. When the first layer 2 and the second layer 3 are formed of EVAs, therefore, the vinyl acetate content of the EVA forming the first layer 2 is desired to be approximately in the range of from 1 to 7% by weight, preferably from 1 to 4% to by weight. The reason for the lower limit of the range is that if the vinyl acetate content is less than 1% by weight, the composite substrate for a medical container has a strong possibility of sacrificing the transparency and the flexibility thereof and, because of a consequent wide difference of EVA composition from the second layer 3, entailing a decrease of adhesiveness between the first layer 2 and the second layer 3. The reason for the upper limit of the range is that if the vinyl acetate content exceeds 7% by weight, the composite substrate has the possibility of sacrificing the proofness against adsorption of pharmaceutical compounds. The vinyl acetate content of the EVA forming the second layer 3 is desired to be approximately in the range of from 7 to 30% by weight, preferably from 15 to 25% by weight. If the vinyl acetate content deviates from this range, the sealing of the composite substrate of this invention for a pharmaceutical container by the high-frequency induction heating is obtained only with substantial difficulty. The reason for the lower limit of the range is that if the vinyl acetate content is less than 7% by weight, the composite substrate for a medical container has the possibility of sacrificing the flexibility and a transfusion bag using this composite substrate has the possibility of causing dispersion in the amount of the fluid for transfusion. The reason for the upper limit of the range is that if the vinyl acetate content exceeds 30% by weight, the composite substrate for a medical container has the possibility of suffering from unduly high flexibility and the medical container using this composite substrate has the possibility of gathering wrinkled on exposure to the heat of sterilization with high-pressure steam.

The EVAs forming the first layer 2 and the second layer 3 are allowed, when necessary, to incorporate therein an antifoggant such as sorbitan fatty acid ester, glyceride, or polyoxyethylene fatty acid ester, an antistatic agent such as polyoxyethylene alkylamine, a slip additive such as fatty acid amide, and an antioxidant of the alkylphenol type in suitable amounts.

The composite substrate 1 of this invention for a medical container can be manufactured by laminating the first layer 2 and the second layer 3, with the first layer 2 as an inner layer and the second layer 3 as an outer layer. For this lamination, various known methods such as extrusion lamination, hotmelt lamination, dry lamination, and wet lamination are available. These layers may be joined to each other through the medium of adhesive agent. Where the substrate is in the form of a sheet or a film, for example, the lamination can be attained by the use of an inflation apparatus provided with two extruders and equipped with a two-layer circular die or a T-die apparatus equipped with a two-layer T die. Where the substrate is in the form of a tube, the lamination can be accomplished by the use of an extruding apparatus similarly provided with two extruders and equipped with a two-layer die. Alternatively, the composite substrate can be formed by dissolving the resin material destined to form the first layer 2 in a solvent or preparing an emulsion of this resin material and subsequently superposing the solution or the emulsion in the form of a coating on the second layer 3.

Further, in the composite substrate 1 for a medical container according to this invention, the wall thicknesses of the first layer 2 and the second layer 3 are not particularly restricted. Since the first layer 2 is intended to confer on the composite substrate such characteristic properties as thermal fusibility required mainly in the sealed part and proofness against adsorption of pharmaceutical compound required on the inner surface of container, it can fulfill its part fully in an amply small wall thickness as compared with the second layer 3 which functions to impart substantial mechanical strength and heatproofness to the substrate. Thus, the thickness of the first layer 2 denoted by $L_1$ and the thickness of the second layer 3 denoted by $L_2$ are desired to satisfy the relation, $L_1 : L_2 = 1 : 2 - 20$, preferably $L_1 : L2 = 1 : 10 - 15$, though variable with the shape of the substrate and the kinds of resin materials forming the layers. By the satisfaction of the condition of wall thickness described above, the heat generated by the second layer 3 on exposure to a high-frequency electric field is efficiently conducted to the first layer 2 and consumed for successful sealing by the high-frequency heating. To be specific, the thickness of the first layer 2 is approximately in the range of from 10 to 100 μm, preferably from 20 to 80 μm and that of the second layer 3 approximately in the range of from 80 to 1,000 μm, preferably from 100 to 800 μm.

In the embodiment illustrated in Fig. 2, a composite substrate 11 for a medical container, similarly to that in the embodiment illustrated in Fig. 1, comprises a first layer 12 formed of a resin material of low melting point and a second layer 13 formed of a resin material of large dielectric loss and large dielectric constant. In this embodiment, the composite substrate 11 further comprises a third layer 14 superposed on the surface of the second layer 13 opposite to the surface thereof held in contact with the first layer 12. Since this third layer 24 functions as an outer layer, it is desired to be formed of a resin material excellent in proofness against surface scratch. Specifically, it can be formed of a polyamide, a polyvinyl alcohol, or an EVA having a low vinyl acetate content. Desirably, however, it is formed of the same resin material as the resin material forming the first layer 12. Thus, the composite substrate is so constructed that the second layer formed of a resin material having a large dielectric loss and a large dielectric constant has the opposite surfaces thereof each covered with the first layer formed of a resin material having a low melting point. This particular three-layer construction allows a cut in the cost for the production of the composite substrate. In the embodiment illustrated in Fig. 2, the first layer 12 and the second layer 13 are formed of the same resin materials as those which form the first layer 2 and the second layer 3 respectively in the embodiment illustrated in Fig. 1.

Particularly in the embodiment illustrated in Fig. 2, the first layer 12 destined to serve as an inner layer is desired to be formed of an EVA having a vinyl acetate content in the range of from 1 to 7% by weight, preferably 1 to 4% by weight, the second layer 13 destined to serve as an intermediate layer to be formed of an EVA having a vinyl acetate content in the range of from 7 to 30% by weight, preferably from 15 to 25% by weight, and the third layer 14 destined to serve as an outer layer to be formed of an EVA having a vinyl acetate content in the range of from 1 to 7% by weight, preferably from 1 to 4% by weight. The reason for the range, 1 to 7% by weight, set for the vinyl acetate content in the EVA forming the third layer 14 is that, if the vinyl acetate content is less than 1% by weight, the composite substrate consequently produced for a medical container has a strong possibility of sacrificing the transparency and the flexibility thereof and, owing to a consequent wide difference in EVA composition from the second layer 13, has the possibility of sacrificing the adhesiveness between the second layer 13 and the third layer 14 and, if the vinyl acetate content exceeds 7% by weight, the produced composite substrate has a very strong posibility of readily sustaining a surface scratch and losing surface gloss. Further, the cost for the production of the composite substrate can be decreased by equalizing in composition the EVA forming the third layer 14 and the EVA forming the first layer 12. The reason for the aforementioned limits set for the vinyl acetate contents of the EVAs forming the first layer 12 and the second layer 13 is the same as that described above with respect to the embodiment illustrated in Fig. 1.

When the composite substrate of this invention for a medical container is fabricated in a three-layer construction as illustrated in Fig. 2 and the component layers thereof are severally formed of EVAs having the pertinent vinyl acetate contents thereof described above, it is particularly suitable for the container of a fluid for transfusion. The reason for this suitability is as follows. The capacity of EVA for adsorbing pharmaceutical compounds is in positive proportion to the vinyl acetate content. The amount of pharmaceutical compounds adsorbed by the substrate of a transfusion container, therefore, can be cut by using an EVA having a low vinyl acetate content as the resin material for the substrate of the transfusion container. Since the surface hardness and the surface gloss of EVA are negatively proportional to the vinyl acetate content of the EVA, the surface hardness and the surface gloss of the substrate for a transfusion container can be enhanced by adopting an EVA of a low vinyl acetate content as the resin material for forming the substrate. Since the flexibility and the transparency of EVA are positively proportional to the vinyl accetate content of the EVA, however, the adoption of an EVA of a low vinyl acetate content as the resin material for the substrate for a transfusion container prevents the produced substrate acquiring flexibility and transparency sufficiently. Incidentally, the proofness against adsorption of pharmaceutical compounds, the surface hardness, and the surface gloss which are required of the substrate for a transfusion container are invariably surface characteristics. By fabricating the substrate in a three-layered structure of EVAs having varying vinyl acetate contents, i.e. using an EVA having a low vinyl acetate content for an inner layer part destined to contact the fluid for transfusion and an outer layer part exposed outwardly and an EVA having a medial to high vinyl acetate content for an intermediate layer part of a substantial wall thickness destined to serve as a supporting member, the produced substrate is enabled to retain the same transparency and flexibility as does the heretofore commercialized substrate formed of an EVA having a medial to high vinyl acetate content and, at the same time, excel in such characteristics as the proofnesss against adsorption of pharmaceutical compounds, the proofness against surface scratch, and the surface gloss.

The EVAs for forming the first layer 12, the second layer 13, and the third layer 14, when necessary, are allowed to incorporate therein an antifoggant such as a sorbitan fatty acid ester, a glyceride, or a polyoxyethylene fatty acid ester, an antioxidant such as a polyoxyethylene alkylamine, a slip additive such as fatty acid amide, and an antioxidant of the alkylphenol type in suitable amounts.

When the composite substrate of this invention for a medical container is possessed of a three-layer structure as illustrated in Fig. 2, this substrate can be produced by laminating the sheets or films destined to form the first layer 12, the second layer 13, and the third layer 14 in such an order that the first layer 12 will constitute an inner layer, the second layer 13 an intermediate layer, and the third layer 14 an outer layer. The lamination in this case, similarly to that in the former case described above, can be attained by adopting any of various known laminating methods or the method using an adhesive agent. Further, when the substrate is in the form of a sheet or a film, for example, the lamination can be attained by using an inflation apparatus provided with three extruding devices and equipped with a three-layer circular die or a T-die apparatus equipped with a three-layer T die. When the substrate is in the form of a tube, the lamination can be attained by using an extrusion apparatus provided with three extruders and equipped with a three-layer die. When the resin material forming the first layer 12 and the resin material forming the third layer 14 are equalized in composition, they can share one extruding device for their several kneading and melting operations so that the number of extruding devices in the aforementioned apparatus may be decreased to two. Alternatively, the substrate of the three-layer structure may be fabricated by dissolving the resin material for the first layer 12 in a solvent or preparing an emulsion of the resin material, applying the solution or the emulsion in the form of a coating on one of the opposite surfaces of the second layer 13, and similarly applying the resin material for the third layer 14 in the form of a coating on the other surface of the second layer 13.

Further, when the composite substrate 11 of this invention for a medical container is fabricated in a three-layer structure as illustrated in Fig. 2, the wall thicknesses of the first layer 12, the second layer 13, and the third layer 14 are not particularly restricted. Since the first layer 12 is intended to confer on the substrate such characteristic properties as fusibility required mainly in the sealed part and proofness against adsorption of pharmaceutical compounds required on the inner surface of container and the third layer 14 is intended to impart proofness against surface abrasion and surface gloss mainly to the substrate, however, they sufficiently fulfill their parts in amply small wall thicknesses as compared with the second layer 13 which substantially functions to impart mechanical strength and heatproofness to the substrate. Though the relation of layer thicknesses hinges on the shape of the substrate, the kinds of the resin materials forming the component layers, etc., it is desired to satisfy the expression, $L_1 : L_2 : L_3 = 1 : 2 - 20 : 0.5 - 5$, preferably $L_1 : L_2 : L_3 = 1 : 10 - 15 : 0.5 - 1$, wherein $L_1$ stands for the thickness of the first layer 12, $L_2$ for the thickness of the second layer 13, and $L_3$ for the thickness of the third layer 14. When this condition of layer thicknesses is satisfied, the heat generated by the second layer 13 by virtue of a high-frequency electric field is efficiently conducted to the first layer 12 and consumed to effect successful sealing by high-frequency induction heating and the produced substrate is enabled to enjoy prominent improvement in proofness against surface scratch and surface gloss. To be specific, the thickness of the first layer 12 is approximately in the range of from 10 to 100 $\mu$m, preferably from 20 to 80 $\mu$m, that of the second layer 13 approximately in the range of from 80 to 1,000 $\mu$m, preferably from 100 to 800 $\mu$m, and that of the third layer 14 approximately in the range of from 10 to 100, preferably from 5 to 60 $\mu$m. When this substrate is used for a medical container, the thickness of the first layer 12 is desired to be approximately in the range of from 20 to 60 $\mu$m, preferably from 30 to 50 $\mu$m, that of the second layer 13 approximately in the range of from 200 to 600 $\mu$m, preferably from 250 to 500 $\mu$m, and that of the third layer 14 approximately in the range of from 10 to 40 $\mu$m, preferably from 10 to 30 $\mu$m.

Where the component layers of the composite substrate of this invention for a medical container are formed of EVA type resins as described above, the cross-linking treatment performed by a physical technique such as the irradiation of an electron beam renders the substrate proofness against the impact of high-pressure steam for sterilization and consequently highly suitable for the production of a medical container. The irradiation can be effected by application of an electric potential of 2 mega-electron bolts on a given substrate in a dosage of from 1 to 10 megarads at a rate of 10 megarads per second.

The composite substrate of this invention for a medical container is molded in the form of a sheet or a tube. It is possessed of an outstanding fusion property as described above and further vested with such fundamental properties as strength, transparency, flexibility, proofness against adsorption of pharmaceutical compounds, proofness against surface abrasion, and surface gloss which are required of a medical container. It is suitably processed to produce various medical containers such as, for example, a transfusion bag, a transfusion circuit, an IHV bag, and other similar transfusion containers.

Fig. 3 is a sectional view illustrating the construction of a transfusion container (transfusion bag), i.e. a medical container embodying this invention, produced by using a composite substrate for a medical container, likewise an embodiment of this invention, constructed as illustrated in Fig. 2.

To be specific, this transfusion bag 21 is obtained by cutting the substrate 11 of this invention molded in the form of a sheet and intended for a medical container thereby preparing wall members 22a, 22b in a desired shape, superposing these wall members 22a, 22b advertently so that the surface of the first layer 12 of each wall member opposite to the surface thereof joined to the second layer of the same wall member will face inwardly (no use is found for this advertence where the resin material for forming the first layer 12 and the resin material for forming the third layer 14 in the composite substrate for a medical container are equalized in composition as described above), and joining the superposed wall members along the registered peripheral edges thereof by high-frequency induction heating seal and/or heat seal after the fashion of a bag. Owing to the construction described above, the composite substrate 11 of this invention for a medical container allows ideal face-to-face union by heat seal and by high-frequency inducting heating seal as well. To form a transfusion fluid outlet 23 at the lower terminal part of the transfusion bag 21, a tubular transfusion fluid port member 24 made of a hard synthetic resin such as medium- to high-density polyethylene, polypropylene, polyester, or polyamide which is incapable of adsorbing pharmaceutical compounds is interposed between the two wall members 22a, 22b. The peripheral surface of this transfusion fluid port member 24 is tightly joined to the inner surfaces of the two wall members 22a, 22b at the same time that the two wall members 22a, 22b are fused along the registered peripheral edges as described above. As a result, it is watertightly nipped between the two wall members 22a, 22b.

EXAMPLES

Now, this invention will be described more specifically below with reference to working examples. It should be noted, however, that this invention is not limited in any sense by these working examples.

Example 1

By the multilayer inflation molding method, a three-layer composite sheet composed of a first layer formed of an EVA having a vinyl acetate content of 2% by weight (dielectric constant $\varepsilon$ = 2.4, dielectric power factor tan$\delta$ = 0.0025 (1 MHz)), a second layer formed of an EVA having a vinyl acetate content of 19% by weight (dielectric constant $\varepsilon$ = 2.9, dielectric power factor tan$\delta$ = 0.045 (1 MHz)), and a third layer formed of an EVA having a vinyl acetate content of 2% by weight (dielectric constant $\varepsilon$ = 2.4, dielectric power factor tan$\delta$ = 0.0025 (1 MHz)) was obtained. The wall thicknesses of the component layers of this three-layer composite sheet were 40 $\mu$m, 290 $\mu$m, and 20 $\mu$m respectively for the first, second, and third layers. The dielectric constant and the dielectric power factor were both determined in accordance with ASTM D - 150 - 64T.

Two rectangular pieces measuring 10 mm in width and 770 mm in length were cut from the three-layer composite sheet and were superposed in such a manner that the first layers thereof would contact each other. The superposed rectangular pieces were joined along their edges on one side by heat seal and high-frequency inducting heating seal and were then tested for seal strength. The heat seal and the high-frequency induction heating seal were carried out under the following conditions.

(1) Heat seal

| | |
|---|---|
| 1)Seal area: | 5 mm × 10 mm |
| 2)Pressure for adhesion: | 2.5 kg·f/cm² |
| 3)Temperature of adhesion: | 180, 190, 200, 210, 220, and 230 °C. |
| 4)Sealing time: | 2.3 seconds |

(2) High frequency dielectric heating seal

| | |
|---|---|
| 1)Apparatus used: | Product of Pearl Kogyo K.K marketed under product code of "AW-96" |
| 2)Seal area: | 5 mm × 10 mm |
| 3)Pressure for adhesion: | 3.5 kg·f/cm² |
| 4)Output: | 6 kW |
| 5)Frequency: | 40.46 MHz |
| 6)Sealing time: | 1.8, 2.0, 2.2, 2.4, 2.6, and 2.8 seconds |

The seal strength was determined by pulling the loose terminals of the joined pieces away from each other under the conditions shown below, measuring the load B (kg) under which rupture occurred in the sample, and computing the average shear strength in accordance with the following numerical expression (4):

$$\tau = B/A \ (\text{kg·f/mm}^2) \quad (4)$$

wherein A stands for seal area (mm²).

The results are shown in Table 2 and Table 3.

## Table 2
### Seal strength by heat seal

| Temperature (°C) | Seal Strength ($kg \cdot f /mm^2$) |
|---|---|
| 180 | 1.9 |
| 190 | 2.0 |
| 200 | 2.1 |
| 210 | 2.0 |
| 220 | 1.9 |
| 230 | 1.9 |

## Table 3
### Seal strength by high-frequency induction heating

| Sealing time (sec.) | Current (A) | Seal Strength ($kg \cdot f /mm^2$) |
|---|---|---|
| 1.8 | 0.5 | 1.7 |
| 2.0 | 0.6 | 1.9 |
| 2.2 | 0.7 | 2.0 |
| 2.4 | 0.7 | 2.2 |
| 2.6 | 0.8 | 2.5 |
| 2.8 | 0.8 | 2.5 |

It is clearly noted from the results shown in Table 2 and Table 3 that the composite substrate for a medical container obtained in accordance with this invention produced outstanding union by heat seal and by high-frequency inducting heating seal alike. Separately, similar cut pieces were joined along along their edges jointly by heat seal and high-frequency induction heating seal and tested for seal strength. The results, not shown in Table 2 or Table 3, indicate that the samples produced as high adhesiveness as mentioned above.

Examples 2 to 4

By the multilayer inflation molding method, three-layer laminated sheets each using EVAs having vinyl acetate contents indicated in Table 4 for the first, second, and third layers were produced. The wall thicknessess of the component layers of these three-layer composite sheets were 30 μm, 300 μm, and 30 μm respectively for the first, second, and third layers.

For each three-layer composite sheets, transfusion bags having an inner volume of 500 ml and constructed as illustrated in Fig. 3 were produced by joining two wall members cut from the three-layer composite sheet along their terminal portions by heat seal and were tested for proofness against adsorption of pharmaceutical compounds, flexibility, transparency, and susceptibility to scratch. The results are show in Table 5.

Examples 5 to 7

The transfusion bags of Examples 2 to 4 were subjected to a cross-linking treatment by the irradiation of an electron beam (application of a potential of 2 mega electron bolts in a dosage of 10 megarads at a rate of 10 megarads/second) and were tested for proofness against atodsorption of pharmaceutical compounds, flexibility, transparency, and susceptibility to scratch. The results are shown in Table 5.

Controls 1 to 5

For comparison, single-layer sheets each formed of an EVA having a vinyl acetate content indicated in Table 4 in a wall thickness of 400 μm were produced by the inflation molding method. Transfusion bags were produced from these single-layer sheets in the same manner as in Examples 2 to 4 and then tested for proofness against adsorption of pharmaceutical compounds, flexibility, transparency, and susceptibility to scratch. The results are shown in Table 5.

Control 6

The transfusion bag of Control 2 was subjected to a cross-linking treatment by the irradiation of an electron beam (application of a potential of 2 mega electron bolts in a dosage of 10 megarads at a rate of 10 megarads/second) and tested for proofness against adsorption of pharmaceutical compounds, flexibility, transparency, and susceptibility to scratch. The results are shown in Table 5.

Controls 7 and 8

By the multilayer inflation molding method performed in the same manner as in Examples 2 to 4, three-layer composite sheets using EVAs having vinyl acetate contents indicated in Table 4 in the first, second, and third layers were obtained. The wall thicknesses of the component layers of these three-layer composite sheets were 30 μm, 300 μm, and 30 μm respectively for the first, second, and third layers.

Transfusion bags were produced from the three-layer composite sheets in the same manner as in Examples 2 to 4 and were tested for proofness against adsorption of pharmaceutical compounds, flexibility, transparency, and susceptibility to scratch. The results are shown in Table 5.

Control 9

The transfusion bag of Control 7 was subjected to a cross-linking treatment by the irradiation of an electron beam (application of a potential of 2 mega electron bolts in a dosage of 10 megarads at a rate of 10 megarads/second) and were tested for proofness against adsorption of pharmaceutical compounds, flexibility, transparency, and susceptibility to scratch. The results are shown in Table 5.

Table 4

| | Vinyl acetate content of EVA (wt %) | | | Notes |
|---|---|---|---|---|
| | Inner layer | Inter-mediate layer | Outer layer | |
| Examle 2 | 1 | 20 | 1 | |
| Examle 3 | 4 | 20 | 4 | |
| Examle 4 | 7 | 20 | 7 | |
| Examle 5 | 1 | 20 | 1 | Bag obtained by cross-linking treatment to the bag of Example 2 |
| Examle 6 | 4 | 20 | 4 | Bag obtained by cross-linking treatment to the bag of Example 3 |
| Examle 7 | 7 | 20 | 7 | Bag obtained by cross-linking treatment to the bag of Example 4 |
| Control 1 | 10 | | | |
| Control 2 | 13 | | | |
| Control 3 | 15 | | | |
| Control 4 | 4 | | | |
| Control 5 | 20 | | | |
| Control 6 | 13 | | | Bag obtained by cross-linking treatment to the bag of Control 2 |
| Control 7 | 0(PE) | 20 | 0(PE) | |
| Control 8 | 4 | 35 | 4 | |
| Control 9 | 0(PE) | 20 | 0(PE) | Bag obtained by cross-linking treatment to the bag of Control 7 |

Table 5

| | proofness against adsorption of pharamaceutical compounds | | | Flexibility | Transparency | susceptibility to surface scratch | adaptability for sterilization in autoclave | Other Problems |
|---|---|---|---|---|---|---|---|---|
| | Nitro-glycerin | Diazebam | Chloro-promazine hydro-chloride | (Elastic modulus) $kg\cdot f/cm^2$ | transmittance (%) | presence or absence of any discernible scratch | | |
| Example 2 | ◎ | ◎ | ◎ | 590 | 85 | absence | not adaptable | none |
| Example 3 | ○ | ○ | ○ | 560 | 87 | absence | not adaptable | none |
| Example 4 | ○ | △ | ○ | 540 | 89 | presence but little | not adaptable | none |
| Example 5 | ◎ | ◎ | ◎ | 590 | 85 | absence | adaptable | none |
| Example 6 | ○ | ○ | ○ | 560 | 87 | absence | adaptable | none |
| Example 7 | ○ | △ | ○ | 540 | 89 | presence but litle | adaptable | none |
| Control 1 | × | △ | △ | 600 | 83 | presence | not adaptable | none |
| Control 2 | × | × | △ | 580 | 85 | presence | not adaptable | none |
| Control 3 | × | × | × | 530 | 90 | presence | not adaptable | none |
| Control 4 | ◎ | ◎ | ◎ | 1500 | 75 | absence | not adaptable | Difficulty in the fluid removal in the closed system |
| Control 5 | × | × | × | 300 | 93 | presence | not adaptable | none |
| Control 6 | × | × | △ | 580 | 85 | presence | adaptable | none |
| Control 7 | ◎ | ◎ | ◎ | 800 | 78 | absence | not adaptable | Bad adhesion of the second layer to the first and third layers |
| Control 8 | ○ | △ | ○ | 500 | 90 | absence | not adaptable | poor strength for a substrate |
| Control 9 | ○ | △ | ○ | 800 | 78 | absence | adaptable | Bad adhesion of the second layer to the first and third layers |

EP 0 495 729 A2

14

It is clearly noted from Table 4 that the conventional products (Controls 1 to 3) exhibited flexibility and transparency on levels proper for a transfusion container but betrayed deficiency in proofness against adsorption of pharmaceutical compounds as evinced by low residual ratios of all the pharmaceutical compounds tested. They had the disadvantage that the container surfaces were susceptible to scratch.

The product of Control 4 yielded satisfactory results regarding proofness against adsorption of pharmaceutical compounds and against surface scratch but were inferior in flexibility and transparency to the products of Controls 1 to 3. Particularly in point of flexibility, it showed an extremely high elastic modulus of 1,500 kg·f/cm$^2$, a magnitude problematic for the fulfillment of the function of a transfusion container because of the difficulty encountered in the removal of a spent fluid from the transfusion container (in the so-called closed system) without recourse to the displacement of the spent fluid with a gas such as air.

In contrast, the product of Control 5 exhibited as satisfactoy flexibility and transparency as the products of Controls 1 to 3 but had the disadvantage of readily adsorbing pharmaceutical compounds and sustaining a surface scratch. The product of Control 6 sustained no deformation during the treatment for sterilization in an autoclave and, similarly to the product of Control 2, exhibited flexibility and transparency on levels proper for a transfusion container but had the disadvantage of offering poor proofness against adsorption of phamaceutical compounds as evinced by low residual ratios of all the pharmaceutical compounds tested and readily sustaining a surface scratch.

The results of test of the products of Controls 1 to 6 clearly indicate that by the conventional method for producing a transfusion container from a single-layer sheet of EVA, it is infeasible to ensure retention of desired flexibility and transparency and, at the same time, preclude the adsorption of pharmaceutical compounds, no matter how the vinyl acetate content of the EVA may be varied.

The product of Control 7 exhibited proofness against adsorption of pharmaceutical compounds, flexibility, transparency, and insusceptibility to scratch on levels proper for a transfusion container but betrayed a functional defect of poor adhesion of the second layer to the first and third layers. The product of Control 8 exhibited proofness against adsorption of pharmaceutical compounds, flexibility, transparency, and insusceptibility to scratch on levels proper for a transfusion container but, owing to a high vinyl acetate content of the EVA forming the second layer, betrayed a functional defect of poor strength for a substrate. The product of Control 9 sustained no deformation during the treatment for sterilization in an autoclave but, similarly to the product of Control 7, betrayed a functional defect of poor adhesion of the second layer to the first and third layers.

In contrast, the transfusion bags obtained in Examples 2 to 7 in accordance with this invention allowed retention of desired flexibility and transparency and, at the same time, permitted preclusion of the adsorption of pharmaceutical compounds and exhibited desired proofness against surface scratch. By visual observation, they were found to enjoy ample surface gloss. Particularly, the products of Examples 2 and 3 showed practically perfect proofness against adsorption of the three pharmaceutical compounds used in the test as evinced by residual ratios invariably exceeding 90%. The product of Example 4 ensured survival of some given pharmaceutical compounds in ratios exceeding 90%, indicating confidence of this product in actual use. The products of Examples 5 to 7 which had undergone the cross-linking treatment by the use of an electron beam sustained no deformation during the treatment for sterilization in an autoclave, indicating that they are ideally used as substrates for a transfusion container. The transfusion bags of Examples 2 to 7 showed ideal fastness of seal along the joined edge parts. Transfusion bags produced by following the procedures of Examples 2 to 7, excepting high-frequency induction heating seal was used in the place of the heat seal, exhibited as satisfactory properties as those of Examples 2 to 7.

The methods employed for the determination of various properties in the working examples and controls cited above are as follows.

(Method for testing proofness against adsorption of pharmaceutical compounds)

This property was evaluated in terms of the residual ratio of a given pharmaceutical compound.

A given transfusion bag was filled with a nitroglycerin transfusion fluid, a diazebam transfusion fluid, or a chloropromazine hydrochloride transfusion fluid prepared under the conditions of formulation shown in Table 6 and left standing at rest in a dark room at 25 °C and R.H. 65% for 24 hours. At the end of the standing, the transfusion fluid was tested for the concentration of residual pharmaceutical compound by the method of determination indicated in Table 6. The residual ratio was computed as follows by comparing the concentration just mentioned with the concentration found immediately after the formulation.

Residual ratio (%) = (Concentration after standing / Concentration immediately after formulation) $\times$ 100

In view of the relation, residual ratio (%) = 100 - adsorption ratio (%), the amount of adsorption decreases in proportion as the residual ratio increases. Thus, the desirability of a sample for use as a transfusion container increases proportionately to an increase in the residual ratio.

In Table 5, the mark "⊚" indicates this data is a residual ratio of not less than 95%, the mark "○" not less than 90%, the mark "△" not less than 85%, and the mark "×" less than 85%.

Table 6

|  | Nitroglycerin | Diazebam | Chloropromazine hydrochloride |
|---|---|---|---|
| Condition of formulation |  |  |  |
| Base transfusion fluid | Physological saline 500ml | Physological saline 500ml | Lactic acid Ringer's liquid 500ml |
| Mixing concentration | approximately 50 ppm | approximately 20 ppm | approximately 50 ppm |
| Method of determination |  |  |  |
|  | HPLC Method<br>Column ODS 4.6 mm ×250 mm<br>Column temperature room temperature<br>Liquid phase acetonitrile/water = 7/3<br>Flow rate 0.7 ml/sec.<br>Injection volume 10$\mu$l<br>Detector UV 210 nm for nitroglycerin UV 225 nm for diazebam | | Absorptiometry Determination of the absorbance at 303 nm |

(Method for testing transparency)

The transparency was evaluated in terms of transmittance at 450 nm determined in accordance with the procedure for testing a transfusion grade plastic container set form in General Testing Method of the Japanese Pharmacopoeia.

(Method for testing susceptibility to surface scratch)

This property was determined by subjecting a sample to a pencil scratch test set forth in JIS (Japanese Industrial Standard) K 5400, using 2B pencils and visually examining the sample surface to find presence or absence of any discernible scratch thereon.

(Method for adaptability for sterilization in autoclave)

This attribute was determined by subjecting a sample to a sterilizing treatment performed in an autoclave at 121 °C under 2.0 atmospheres for 20 minutes and examining the sample to find whether or not the sample retained its original shape intact or sustained any deformation as by melting.

## Claims

1. A composite substrate for a medical container, comprising a first layer formed of a resin material having a melting point in the range of from 80 to 250 °C and a second layer formed of a resin material satisfying the relation of the following numerical expression (1):

$$\varepsilon_2 - \tan\delta_2 \geqq 0.05 \quad (1)$$

wherein $\varepsilon_2$ stands for the dielectric constant and $\tan\delta_2$ for the dielectric power factor at 1 MHz, wherein said first layer and said second layer are laminated to each other.

2. A composite substrate according to claim 1, wherein said composite substrate satisfies the relation, $L_1 : L_2 = 1 : 2 - 20$, wherein $L_1$ stands for the thickness of said first layer and $L_2$ for the thickness of said second layer.

3. A composite substrate according to claim 1, wherein said composite substrate satisfies the relation, $L_1 : L_2 = 1 : 10 - 15$, wherein $L_1$ stands for the thickness of said first layer and $L_2$ for the thickness of said second layer.

4. A composite substrate according to claim 1, wherein said resin material forming said first layer is an ethylene-vinyl acetate copolymer having a vinyl acetate content in the range of from 1 to 7% by weight and said resin material forming said second layer is an ethylene-vinyl acetate copolymer having a vinyl acetate content in the range of from 7 to 30% by weight.

5. A composite substrate according to claim 1, wherein said resin material forming said first layer is an ethylene-vinyl acetate copolymer having a vinyl acetate content in the range of from 1 to 4% by weight and said resin material forming said second layer is an ethylene-vinyl acetate copolymer having a vinyl acetate content in the range of from 15 to 25% by weight.

6. A composite substrate according to claim 1, wherein said second layer is joined on the surface thereof opposite to the surface thereof held in contact with said first layer to a third layer formed of a resin material possessed of proofness against surface abrasion.

7. A composite substrate according to claim 6, wherein said third layer is formed of at least one resin member selected from the group consisting of a polyamide, a polyvinyl alcohol, or an ethylene-vinyl aetate copolymer having a vinyl acetate content in the range of from 1 to 7% by weight.

8. A composite substrate according to claim 6, wherein said third layer is formed of the same resin material as used for said first layer.

9. A composite substrate according to claim 5, wherein said second layer is joined on the surface thereof opposite to the surface thereof held in contact with said first layer to a third layer and said third layer is formed of the same resin material as used for said first layer.

10. A composite substrate according to claim 6 or claim 9, wherein aid composite substrate satisfies the relation, $L_1 : L_2 : L_3 = 1 : 2 - 20 : 0.5 - 5$, wherein $L_1$ stands for the thickness of said first layer, $L_2$ for the thickness of said second layer, and $L_3$ for the thickness of said third layer.

11. A composite substrate according to claim 9, wherein said composite substrate satisfies the relation, $L_1 : L_2 : L_3 = 1 : 10 - 15 : 0.5 - 1$, wherein $L_1$ stands for the thickness of said first layer, $L_2$ for the thickness of said second layer, and $L_3$ for the thickness of said third layer.

12. A composite substrate according to claim 6, wherein said first layer is formed of an ethylene-vinyl copolymer sheet having a wall thickness in the range of from 20 to 60 μm and having a vinyl acetate content in the range of from 1 to 7% by weight, said second layer is formed of an ethylene-vinyl aceate copolymer sheet having a wall thickness in the range of from 200 to 600 μm and having a vinyl acetate content in the range of from 7 to 30% by weight, and said third layer is formed of an ethylene-vinyl acetate copolymer sheet having a wall thickness in the range of from 10 to 40 μm and having a vinyl acetate content in the range of from 1 to 7% by weight.

13. A medical container formed substantially of a composite substrate set forth in any of claims 1 to 9 and having prescribed portions thereof fused by heat seal and/or high-frequency seal thereby forming an inner empty space therein, wherein the inner surface of said medical container is formed by the surface of said first layer of said composite substrate opposite to the surface thereof joined to said second layer.

14. A medical container formed substantially of a composite substrate set forth in claim 10 and having prescribed portions thereof fused by heat seal and/or high-frequency seal thereby forming an inner empty space therein, wherein the inner surface of said medical container is formed by the surface of said first layer of said composite substrate opposite to the surface thereof joined to said second layer.

15. A medical container formed substantially of a composite substrate set forth in claim 12 and having prescribed portions thereof fused by heat seal and/or high-frequency seal thereby forming an inner empty space therein, wherein the inner surface of said medical container is formed by the surface of said first layer of said composite substrate opposite to the surface thereof joined to said second layer.

16. A medical container formed substantially of a composite substrate set forth in any of claims 4, 5, 9, and 12 and having prescribed portions thereof fused by heat seal and/or high-frequency seal thereby forming an inner empty space therein, wherein the inner surface of said medical container is formed by the surface of said first layer of said composite substrate opposite to the surface thereof joined to said second layer and said composite substrate destined to form the wall surface of said medical container after said fusion has been subjected to a cross-linking treatment by the irradiation of an electron beam.

# FIG.1

# FIG.2

# FIG.3